(19) Europäisches Patentamt

European Patent Office

Office européen des brevets

(11) EP 0 746 154 B1

(12) EUROPEAN PATENT SPECIFICATION

(45) Date of publication and mention
of the grant of the patent:
06.09.2000 Bulletin 2000/36

(51) Int Cl.⁷: H04N 5/45

(21) Application number: 96303913.6

(22) Date of filing: 30.05.1996

(54) **A subpicture signal vertical compression circuit**

Schaltung zur vertikalen Kompression eines Kleinbildsignals

Circuit de compression verticale d'un signal d'image incrustée

(84) Designated Contracting States:
DE FR GB

(30) Priority: 02.06.1995 JP 13645195

(43) Date of publication of application:
04.12.1996 Bulletin 1996/49

(73) Proprietor: MATSUSHITA ELECTRIC INDUSTRIAL
CO., LTD.
Kadoma-shi, Osaka 571-0050 (JP)

(72) Inventors:
• Morita, Tomoko
Hirakata-shi, Osaka 573 (JP)
• Okumura, Naoji
Minou-shi, Osaka 562 (JP)
• Tani, Masahiro
Daito-shi, Osaka 574 (JP)

(74) Representative: Crawford, Andrew Birkby et al
A.A. Thornton & Co.
235 High Holborn
London WC1V 7LE (GB)

(56) References cited:
EP-A- 0 249 281        EP-A- 0 573 280
DE-A- 4 137 210        US-A- 4 984 083

**Description**

BACKGROUND OF THE INVENTION

The invention relates to a subpicture image signal vertical compression circuit for vertically compressing sub pictures operating at a respective synchronous timings different from that of main picture when a plurality of image signals having respective different synchronizations are displayed on an image display device, especially, to a subpicture image signal vertical compression circuit for a compressed interlace display of one or plural subpictures having respective synchronous timings different from that of main picture on an image display device together with the main picture of interlace display.

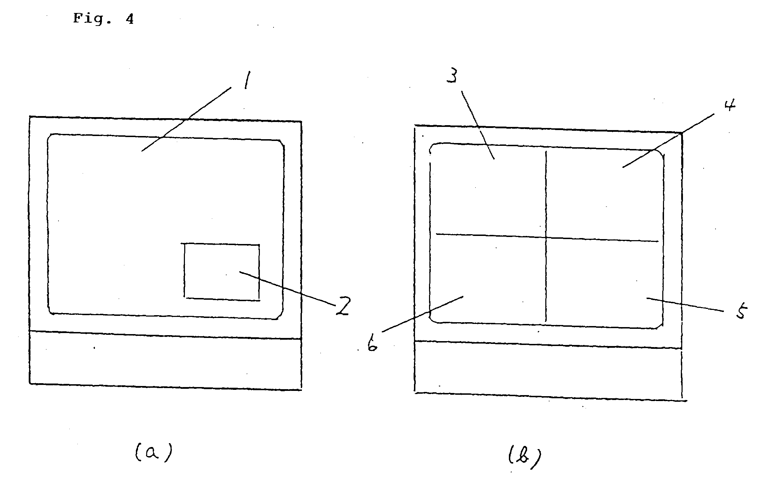

Needs for simultaneously displaying a plurality of images and informations has increased recently. These displays corresponding to the multimedia era have been required. Fig. 4 shows examples of the display device. There is a case where a subpicture 2 is displayed in the main picture 1 as shown in Fig.4 (a), or a case where subpictures 4, 5, 6 having the same size as the main picture are simultaneously displayed as shown in Fig. 4 (b). At this time, the picture displaying the image signal used as the synchronous signal of displaying screen is the main picture.

When a plurality of image signals having respective synchronous signals are simultaneously displayed on an image display device, the synthetic technology is important.

As the main picture signal is synchronizing with the image display device, the timing of its image signal processing such as picture compressing has no problem, but as the subpicture signal is not synchronizing with the image display device, consideration must be given to its timing.

The invention relates to a subpicture image signal vertical compression circuit for compressing the subpicture image signal in vertical direction by vertical interpolation, both the main picture signal and the subpicture signal here are assumed as interlace signals.

EP-A-0573280 describes a television signal processing circuit with a display device on which a main picture is to be displayed and on which a subpicture is to be superimposed. The main and subpictures can be displayed in a number of modes, including Normal, Zoom, Squeeze and Letter-box, according to a number of fixed compression ratios. This disclosure is aimed at providing display of both pictures without distortion.

EP-A-0249281 also discloses a device for the display of a subpicture in a main picture. In this device, the field polarity of the main and subpictures are determined in order to properly synchronise the even and odd fields of the two pictures when displayed.

The present invention, as defined in claim 1 and dependent claims, provides a subpicture image signal vertical compression circuit for use with a subpicture image signal corresponding to a subpicture to be displayed within a main picture which has a corresponding main picture signal, each of said main picture signal and said subpicture signal having respective first and second fields, the circuit comprising:

a main picture field discrimination circuit for generating a first field discrimination signal representing the polarity indicating from which of the first field or second field the scan of the main picture starts from the vertical pulse and horizontal pulse of the main picture;
a subpicture field discrimination circuit for generating a second field discrimination signal representing the polarity indicating from which of the first filed or second field the scan of the subpicture starts from the vertical pulse and horizontal pulse of the subpicture; and
an output circuit for generating a vertically compressed subpicture image signal according to a predetermined compression rate;

characterised by further comprising an offset generation circuit responsive to said first and second field discrimination signals and said predetermined compression rate to generate offsets according to whether each of the first and second fields of the compressed subpicture image signal is to be put into the first or second field of the main picture signal;

said output circuit being responsive to said offsets to shift the timing of the field scan start signal of said subpicture.

In one embodiment of the invention the offset generation circuit sets the offset of the first field as 0, and determines the offset of the second field by subtracting 1/2 from 1/2 of the reciprocal of the compression rate when the field polarities of said main picture and said subpicture are the same, and determines the offset of the first field by subtracting 1/2 from 1/2 of the reciprocal of the compression rate and sets the offset of the second field as -1 when the field polarities of said main picture and said subpicture are different.

In a second embodiment the offset generation circuit sets the offset of the first field as 0, and determines the offset of the second field by subtracting 1/2 from 1/2 of the reciprocal of the compression rate when the field polarities of said main picture and said subpicture are the same, and determines the offset of the first field as 1/2 of the reciprocal of the compression rate and sets the offset of the second field as -1/2 when the field polarities of said main picture and said subpicture are different.

In a third embodiment, the offset generation circuit comprises:

a first offset generation circuit setting the offset of the first field as 0, and determining the offset of the second field by subtracting 1/2 from 1/2 of the reciprocal of the compression rate when the field polarities of said main picture and said subpicture are the same, and determining the offset of the first field by subtracting 1/2 from 1/2 of the reciprocal of the compression rate and setting the offset of the second field as -1 when the field polarities of said main picture and said subpicture are different;

a second offset generation circuit setting the offset of the first field as 0, and determining the offset of the second field by subtracting 1/2 from 1/2 of the reciprocal of the compression rate when the field polarities of said main picture and said subpicture are the same, and determining the offset of the first field as 1/2 of the reciprocal of the compression rate and the offset of the second field as -1/2 when the field polarities of said main picture and said subpicture are different; and

a frequency difference detecting circuit detecting the difference between the main picture field frequency and the the subpicture field frequency, and selecting to output one of the offsets generated by said first offset generation circuit and the offsets generated by said second offset generation circuit according to said detected frequency difference.

It will be understood then that the invention provides a subpicture image signal vertical compression circuit for providing a subpicture without unnaturality in its vertical motion by:

judging if the field polarity of the subpicture is the same as that of the main picture;

generating offsets of the first field and the second field according to above judgment;

correcting the phase of pixel value interpolation according to the offsets and performing the interpolation and the compression.

In the third embodiment mentioned above, suitable offsets are generated at the first field and the second field according to if the polarities of main picture and subpicture are the same or not, the compression is performed, the inversion of scan order in vertical direction of the subpicture signal at the first field and the second field after the synthesis with main picture can be prevented, so the subpicture image without unnatural moving in vertical direction can be obtained.

Further, according to claim 5, more preferable offset can be generated by switching two offset circuits by using main picture field frequency and subpicture field frequency

## BRIEF DESCRIPTION OF THE DRAWINGS

Fig. 1 is a block diagram of a subpicture image signal vertical compression circuit showing an embodiment of claim 1 through 4 of the invention.

Fig. 2 is a block diagram of a subpicture image signal vertical compression circuit showing an embodiment of claim 5 of the invention.

Fig. 3 is an operational waveform diagram for illustrating the operation of the circuit.

Fig. 6 (a) is a first example of a plurality of image signals having respective different timings of the synchronous signal displayed on an image display device.

(b) is a second example of a plurality of image signals having respective different timings of the synchronous signal displayed on an image display device.

## DESCRIPTION OF THE PREFERRED EMBODIMENTS

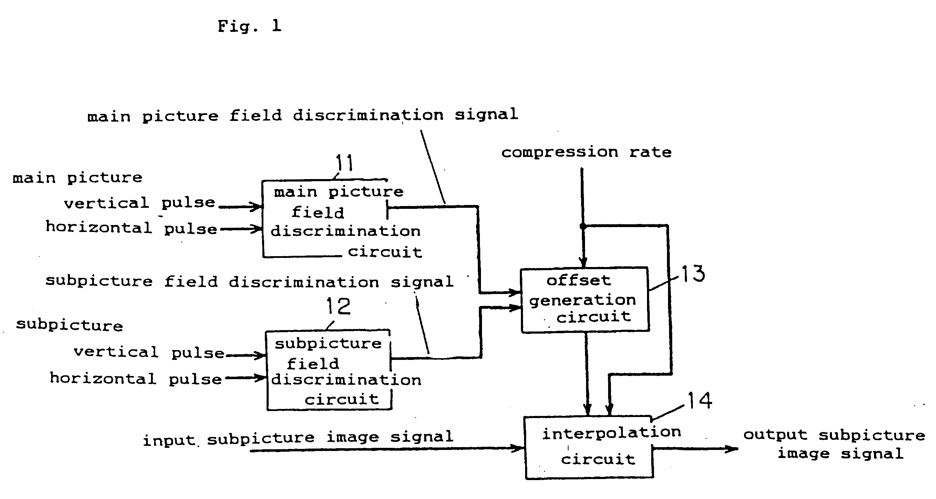

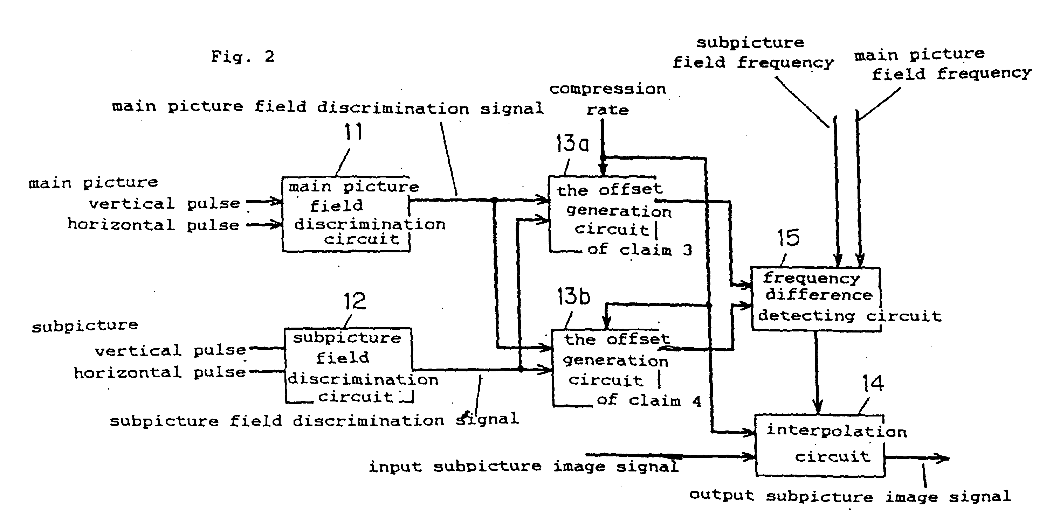

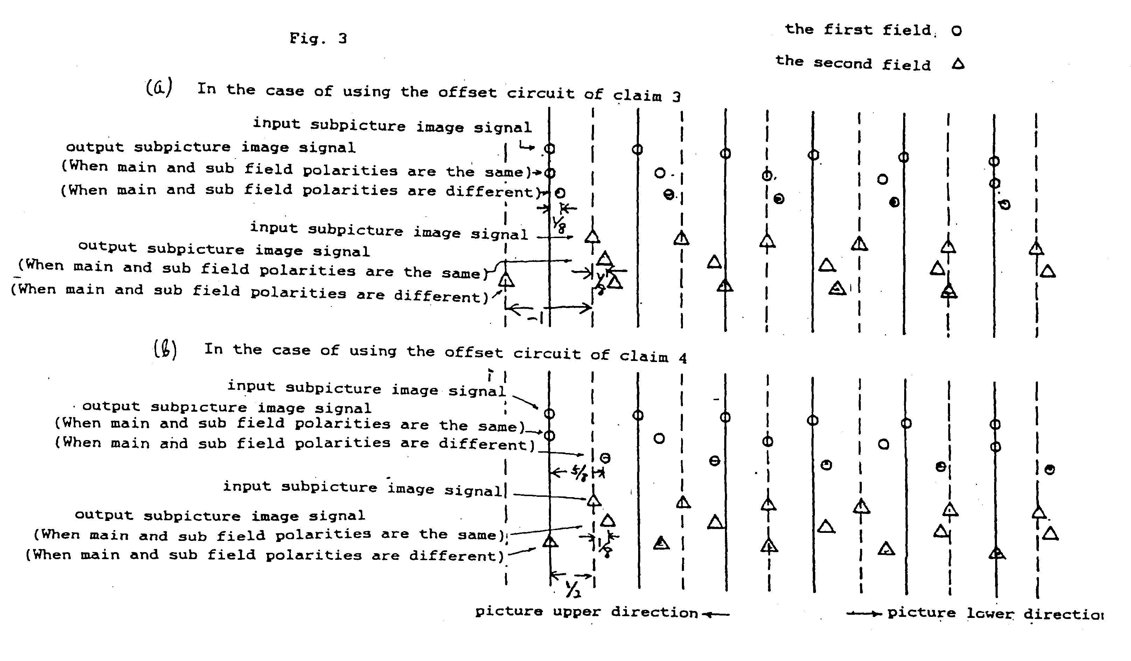

A subpicture image signal vertical compression circuit of an embodiment of the invention will be illustrated referring to drawings. Fig. 1 is a block diagram of a subpicture image signal vertical compression circuit showing an embodiment of claim 1 through 4 of the invention. Fig. 2 is a block diagram of a subpicture image signal vertical compression circuit showing an embodiment of claim 5 of the invention. Fig. 3 is an operational waveform diagram for illustrating the operation of the subpicture image signal vertical compression circuit showing an embodiment of claim 5 of the invention. Signals shown in Fig. 1 through 3 are corresponding to each other.

In Fig. 1, 11 is a main picture field discrimination circuit for discriminating the field polarity of the main picture from the vertical pulse and the horizontal pulse of the image signal having the image information of the main picture. 12 is a subpicture field discrimination circuit for discriminating the field polarity of the subpicture from the vertical pulse and the horizontal pulse of the input subpicture image signal having image information of the subpicture.

13 is an offset generation circuit for generating offsets corresponding to the compression rate at the first field and the second field of the subpicture. 14 is an interpolation circuit for interpolating the input subpicture image signal through the offsets and the compression rate.

The operation of the subpicture image signal vertical compression circuit structured as above is described hereafter.

The main picture field discrimination circuit 11 discriminates whether the polarity is the first field or the second field from the vertical pulse and horizontal pulse of the main picture and outputs the result.

The subpicture field discrimination circuit 12 discriminates whether the polarity is the first field or the second field from the vertical pulse and horizontal pulse of the subpicture and outputs the result.

The offset circuit 13 determines offsets by following steps.

When the field polarities of main picture and subpicture are the same, the offset of the first field is made 0, and the offset of the second field is determined according to the compression rate. In Fig. 3, as five line signal of an input subpicture image signal is compressed to a four line signal in the subpicture, the compression rate is 4 / 5, and 1 / 2 is subtracted from 1 / 2 of the reciprocal of the compression rate and the offset becomes 1 / 8.

When the field polarities of main picture and subpicture are different, the offset of the first field is obtained by subtracting 1 / 2 from 1 / 2 of the reciprocal of the compression rate and the offset of the second field is determined as -1.

Next, since interpolation circuit 14 sometimes has to arrange pixels at the portion where scan line doesn't exist because of thinning out for the compression and the like, pixels are arranged between the scan lines by interpolation and then the input subpicture image signal is compressed and outputted, at this moment, the interpolation phases of the first field and the second field are delayed by each of offsets.

Some thinning methods allow the compression using pixels on a scan line, accordingly, interpolation does not performed at this case, and a compression thinning the sane lines simply can be performed.

This case is [the case using the offset circuit of claim 3] in Fig. 3, and when the field polarities of main picture and subpicture are the same, as the offset of the first field is 0, the input subpicture image signal and the output subpicture image signal have the same interpolation phase (when main and sub fields have the same polarity), and as the offset of the second field is 1 / 8, the output subpicture image signal (when main and sub fields have the same polarity) delays by 1 / 8 with respect to the input subpicture image signal of the second field.

When main and sub fields have different polarities, as the offset is 1 / 8 in the first field, the output subpicture image signal (when main and sub fields have different polarities) delays by 1 / 8 phase with respect to the input subpicture image signal and as the offset of the second field is -1, the output subpicture image signal (when main and sub fields have different polarities) advances by 1 with respect to the input subpicture image signal of the second field.

As above, according to whether the main and sub field polarities are the same or not, the offsets generated at the first and second fields are switched to prevent the inversion of scan order in vertical direction at the first field and second field of the subpicture signal after the synthesis with the main picture and to obtain the subpicture having natural movement in vertical direction. Since the offset of the first field and the offset of the second field are only interchanged according to whether the polarities of main and sub pictures are the same or not, there is an advantage that picture quality of subpicture after interpolation and compression in vertical direction can be kept.

However, there is a disadvantage that the phase of the subpicture after interpolation and compression in vertical direction slide by 0.5 line depend on the polarities of main and sub pictures are the same or not.

In claim 4, when the field polarities of main and sub pictures are the same, similar to claim 2, the offset of the first field is determined as 0, the offset of the second field is obtained by subtracting 1 / 2 from 1 / 2 of the reciprocal of the compression rate. While, when the field polarities of main and sub pictures are different, the offset of the first field is 1 / 2 of the reciprocal of the compression rate, the offset of the second field is determined as - 1 / 2 to make the phase of subpicture after interpolation and compression in vertical direction to the same whether the field polarities of main and sub pictures are the same or not.

This case is [the case using the offset circuit of claim 4] in Fig. 3, and when the field polarities of main picture and subpicture are the same, as the offset of the first field is 0 similar to claim 2, the input subpicture image signal and the output subpicture image signal have the same interpolation phase (when main and sub fields have the same polarity), and as the offset of the second field is 1 / 8, the output subpicture image signal (when main and sub fields have the same polarity) delays by 1 / 8 phase with respect to the input subpicture image signal of the second field.

When main and sub fields have different field polarities, as the offset is 5 / 8 in the first field, the interpolation phase of the output subpicture image signal (when main and sub fields have different polarities) delays by 5 / 8 with respect to the input subpicture image signal and as the offset in the second field is -1 / 2, the phase of the output subpicture image signal (when main and sub fields have different polarities) advances by 1 / 2 with respect to that of the input subpicture image signal of the second field.

However, since the offsets given are changed according to whether the main and sub field polarities are the same or not, the qualities of the subpicture after interpolation and compression in vertical direction are different.

In the claim 5, the offset generation circuits of claim 3 and claim 4 are switched by whether the difference between the main picture frequency and the subpicture frequency is large or small.

When the frequency difference is small, since switching of main and sub field polarities does not occur very often, the phase slide by 0.5 line of the subpicture after interpolation and compression in vertical direction between the cases where the main and sub field polarities are the same or different is allowable. Priority being on the picture quality, the offset generation circuit of claim 3 is selected, and the interpolation and compression is performed by using the output from the offset circuit of claim 3 as the offsets. When the frequency difference is large, since switching of the same or different of main and sub field polarities occurs very often, so the phase slide by 0.5 line is not allowable, so the offset generation circuit of claim 4 is selected to make the phase of subpicture after interpolation and compression in the vertical direction to the same phase.

In the invention illustrated above, the offsets of the first field and the second field are switched according to whether the field polarities of main and sub pictures are the same or not, further, performing interpolation and compression by selecting one suitable offset generation circuit from the two offset circuits by the relation between the field frequencies of main picture and subpicture, a subpicture image with natural movement in vertical direction can be obtained.

**Claims**

1. A subpicture image signal vertical compression circuit for use with a subpicture image signal corresponding to a subpicture to be displayed within a main picture which has a corresponding main picture signal, each of said main picture signal and said subpicture signal having respective first and second fields, the circuit comprising:

    a main picture field discrimination circuit (11) for generating a first field discrimination signal representing the polarity indicating from which of the first field or second field the scan of the main picture starts from the vertical pulse and horizontal pulse of the main picture;
    a subpicture field discrimination circuit (12) for generating a second field discrimination signal representing the polarity indicating from which of the first field or second field the scan of the subpicture starts from the vertical pulse and horizontal pulse of the subpicture; and
    an output circuit for generating a vertically compressed subpicture image signal according to a predetermined compression rate;

    characterised by further comprising an offset generation circuit (13) responsive to said first and second field discrimination signals and said predetermined compression rate to generate offsets according to whether each of the first and second fields of the compressed subpicture image signal is to be put into the first or second field of the main picture signal;
    said output circuit being responsive to said offsets to shift the timing of the field scan start of said subpicture by the equivalent of said offsets.

2. The subpicture image signal vertical compression circuit of claim 1 wherein said output circuit outputs pixel values interpolated from the pixel values based on said input subpicture image signal and performs vertical compression by means of thinning out scan lines.

3. The subpicture image signal vertical compression circuit of claim 1 or 2 wherein said offset generation circuit (13a) sets the offset of the first field as 0, and determines the offset of the second field by subtracting 1/2 from 1/2 of the reciprocal of the compression rate, as defined by the expression $\frac{1}{2} \times \frac{1}{n} \times H - \frac{1}{2} H$, when the field polarities of said main picture and said subpicture are the same, and determines the offset of the first field by subtracting 1/2 from 1/2 of the reciprocal of the compression rate, as defined by the expression $\frac{1}{2} \times \frac{1}{n} \times H - \frac{1}{2} H$, and sets the offset of the second field as -1, as defined by the expression -H, when the field polarities of said main picture and said subpicture are different, wherein H is the scanning time for one line and n is the compression rate.

4. The subpicture image signal vertical compression circuit of claim 1 or 2 wherein said offset generation circuit (13b) sets the offset of the first field as 0, and determines the offset of the second field by subtracting 1/2 from 1/2 of the reciprocal of the compression rate, as defined by the expression $\frac{1}{2} \times \frac{1}{n} \times H - \frac{1}{2} H$, when the field polarities of said main picture and said subpicture are the same, and determines the offset of the first field as 1/2 of the reciprocal of the compression rate, as defined by the expression $\frac{1}{2} \times \frac{1}{n} \times H$, and sets the offset of the second field as - 1/2, as defined by the expression $- \frac{1}{2} H$, when the field polarities of said main picture and said subpicture are different, wherein H is the scanning time for one line and n is the compression rate.

5. The subpicture image signal vertical compression circuit of claim 1 or 2 wherein said offset generation circuit comprises:

    a first offset generation circuit (13a) setting the offset of the first field as 0, and determining the offset of the second field by subtracting 1/2 from 1/2 of the reciprocal of the compression rate, as defined by the expression $\frac{1}{2} \times \frac{1}{n} \times H - \frac{1}{2} H$, when the field polarities of said main picture and said subpicture are the same, and determining the offset of the first field by subtracting 1/2 from 1/2 of the reciprocal of the compression rate, as defined by the expression $\frac{1}{2} \times \frac{1}{n} \times H - \frac{1}{2} H$, and setting the offset of the second field as -1, as defined by the expression -H, when the field polarities of said main picture and said subpicture are different;
    a second offset generation circuit (13b) setting the offset of the first field as 0, and determining the offset of the second field by subtracting 1/2 from 1/2 of the reciprocal of the compression rate, as defined by the expression $\frac{1}{2} \times \frac{1}{n} \times H - \frac{1}{2} H$, when the field polarities of said main picture and said subpicture are the same, and determining the offset of the first field as 1/2 of the reciprocal of the compression rate, as defined by the expression $\frac{1}{2} \times \frac{1}{n} \times H$, and the offset of the second field as -1/2, as defined by the expression $-\frac{1}{2} H$, when the field polarities of said main picture and said subpicture are different, wherein H is the scanning time for one line and n is the compression rate; and
a frequency difference detecting circuit (15) detecting the difference between the main picture field frequency and the the subpicture field frequency, and selecting to output one of the offsets generated by said first offset generation circuit and the offsets generated by said second offset generation circuit according to said detected frequency difference.

## Patentansprüche

1. Fensterbildsignal-Vertikalkomprimierungsschaltung zur Anwendung bei einem Fensterbildsignal, das einem in einem Hauptbild mit einem entsprechenden Hauptbildsignal anzuzeigenden Fensterbildsignal entspricht, wobei sowohl das Hauptbildsignal als auch das Fensterbildsignal jeweilige erste und zweite Felder (Halbbilder) aufweisen und die Schaltung umfasst:

   eine Hauptbildfeld-Unterscheidungsschaltung (11) zum Erzeugen eines ersten Feldunterscheidungssignals, das die Polarität darstellt, welche bezeichnet, von welchem Feld, dem ersten oder zweiten Feld, die Abtastung des Hauptbildes von dem Vertikalimpuls und dem Horizontalimpuls des Hauptbildes beginnt;
   eine Fensterbildfeld-Unterscheidungsschaltung (12) zum Erzeugen eines zweiten Feldunterscheidungssignals, das die Polarität darstellt, welche bezeichnet, von welchem Feld, dem ersten oder zweiten Feld, die Abtastung des Fensterbildes von dem Vertikalimpuls und dem Horizontalimpuls des Fensterbildes beginnt; und
   eine Ausgabeschaltung zum Erzeugen eines gemäß einer vorgegebenen Komprimierungsrate vertikal komprimierten Fensterbildsignals; dadurch gekennzeichnet, dass sie weiter eine Versatzerzeugungsschaltung (13) umfasst, die auf das erste und das zweite Feld-Unterscheidungssignal und die vorgegebene Komprimierungsrate zum Erzeugen von Versatzwerten entsprechend der Tatsache reagiert, welches der jeweils ersten und der zweiten Felder des komprimierten Fensterbildsignals in das erste bzw. das zweite Feld des Hauptbildsignals einzusetzen ist;
   wobei die Ausgabeschaltung auf die Versatzwerte mit Verschieben der Zeitgabe des Feld-Abtastbeginns des Fensterbildes um das Äquivalent der Versatzwerte reagiert.

2. Fensterbildsignal-Vertikalkomprimierungsschaltung nach Anspruch 1, bei der die Ausgabeschaltung aus den auf dem Eingabe-Fensterbildsignal beruhenden Pixelwerten interpolierte Pixelwerte ausgibt und vertikale Komprimierung mittels Ausdünnung von Abtastzeilen ausführt.

3. Fensterbildsignal-Vertikalkomprimierungsschaltung nach Anspruch 1 oder 2, bei der die Versatzerzeugungsschaltung (13a) den Versatz des ersten Feldes als 0 festsetzt und den Versatz des zweiten Feldes durch Abziehen von 1/2 von 1/2 des Reziproken der Komprimierungsrate bestimmt, wie durch den Ausdruck $\frac{1}{2} \cdot \frac{1}{n} \cdot H - \frac{1}{2} H$ definiert, wenn die Feldpolaritäten des Hauptbildes und des Fensterbildes gleich sind, und den Versatz des ersten Feldes durch Abziehen von 1/2 von 1/2 des Reziproken der Komprimierungsrate bestimmt, wie durch den Ausdruck $\frac{1}{2} \cdot \frac{1}{n} \cdot H - \frac{1}{2} H$ definiert, und den Versatz des zweiten Feldes auf -1 setzt, wie durch den Ausdruck -H definiert, wenn die Feldpolaritäten des Hauptbildes und des Fensterbildes verschieden sind, wobei H die Abtastzeit für eine Zeile und n die Komprimierungsrate ist.

4. Fensterbildsignal-Vertikalkomprimierungsschaltung nach Anspruch 1 oder 2, wobei die Versatzerzeugungsschaltung (13b) den Versatz des ersten Feldes auf 0 setzt, und der Versatz des zweiten Feldes durch Abziehen von 1/2 von 1/2 des Reziproken der Komprimierungsrate bestimmt wird, wie durch den Ausdruck $\frac{1}{2} \cdot \frac{1}{n} \cdot H - \frac{1}{2} H$ definiert, wenn die Feldpolaritäten des Hauptbildes und des Fensterbildes gleich sind, und den Versatz des ersten Feldes als 1/2 des Reziproken der Komprimierungsrate bestimmt, wie durch den Ausdruck $\frac{1}{2} \cdot \frac{1}{n} \cdot H$ definiert, und den Versatz des zweiten Feldes auf -1/2 setzt, wie durch den Ausdruck $-\frac{1}{2} H$ definiert, wenn die Feldpolaritäten des Hauptbildes und des Fensterbildes unterschiedlich sind, wobei H die Abtastzeit für eine Zeile und n die Komprimierungsrate ist.

5. Fensterbildsignal-Vertikalkomprimierungsschaltung nach Anspruch 1 oder 2, bei der die Versatzerzeugungsschaltung umfasst:

   eine erste Versatzerzeugungsschaltung (13a), welche den Versatz des ersten Feldes auf 0 setzt, und den Versatz des zweiten Feldes durch Abziehen 1/2 von 1/2 des Reziproken der Komprimierungsrate bestimmt, wie durch den Ausdruck $\frac{1}{2} \cdot \frac{1}{n} \cdot H - \frac{1}{2} H$ definiert, wenn die Feldpolaritäten des Hauptbildes und des Fensterbildes gleich sind, und den Versatz des ersten Feldes durch Abziehen von 1/2 von 1/2 des Reziproken der Komprimierungsrate bestimmt, wie durch den Ausdruck $\frac{1}{2} \cdot \frac{1}{n}$ H - $\frac{1}{2}$ H definiert, und den Versatz des zweiten Feldes auf -1 setzt, wie durch den Ausdruck -H definiert, wenn die Feldpolaritäten des Hauptbildes und des Fensterbildes verschieden sind;

eine zweite Versatzerzeugungsschaltung (13b), welche den Versatz des ersten Feldes auf 0 setzt, und den Versatz des zweiten Feldes bestimmt durch Abziehen von 1/2 von 1/2 des Reziproken der Komprimierungsrate bestimmt, wie durch den Ausdruck $\frac{1}{2} \cdot \frac{1}{n} \cdot$ H - $\frac{1}{2}$ H definiert, wenn die Feldpolaritäten des Hauptbildes und des Fensterbildes gleich sind, und den Versatz des ersten Feldes als 1/2 des Reziproken der Komprimierungsrate bestimmt, wie durch den Ausdruck $\frac{1}{2} \cdot \frac{1}{n} \cdot$ H definiert, und den Versatz des zweiten Feldes auf -1/2 bestimmt, wie durch den Ausdruck-$\frac{1}{2}$ H definiert, wenn die Feldpolaritäten des Hauptbildes und des Fensterbildes unterschiedlich sind, wobei H die Abtastzeit für eine Zeile und n die Komprimierungsrate ist, und

eine Frequenzdifferenz-Erfassungsschaltung (15), welche die Differenz zwischen der Hauptbild-Feldfrequenz und der Fensterbild-Feldfrequenz erfasst und das Ausgeben eines der Versatzwerte wählt, die durch die erste Versatzerzeugungsschaltung erzeugt werden, oder der Versatzwerte, die durch die zweite Versatzerzeugungsschaltung entsprechend der erfassten Frequenzdifferenz erzeugt werden.

## Revendications

1. Circuit de compression verticale d'un signal d'image incrustée en vue d'une utilisation avec un signal d'image incrustée correspondant à une image incrustée à visualiser à l'intérieur d'une image principale qui possède un signal d'image principale correspondant, chacun dudit signal d'image principale et dudit signal d'image incrustée ayant des première et seconde demi-trames respectives, circuit comportant :

un circuit de discrimination de demi-trame d'image principale (11) afin de générer un premier signal de discrimination de demi-trame représentant la polarité indiquant à partir de laquelle de la première demi-trame ou de la seconde demi-trame, le balayage de l'image principale commence à partir de l'impulsion verticale et de l'impulsion horizontale de l'image principale ;

un circuit de discrimination de demi-trame d'image incrustée (12) afin de générer un second signal de discrimination de demi-trame représentant la polarité indiquant à partir de laquelle de la première demi-trame ou de la seconde demi-trame, le balayage de l'image incrustée commence à partir de l'impulsion verticale et de l'impulsion horizontale de l'image incrustée ; et

un circuit de sortie afin de générer un signal d'image incrustée comprimé verticalement selon un taux de compression prédéterminé ;

caractérisé en ce qu'il comporte en outre un circuit de génération de décalage (13) sensible auxdits premier et second signaux de discrimination de demi-trame et audit taux de compression prédéterminé pour générer des décalages selon que chacune des première et seconde demi-trame du signal d'image incrustée comprimée doit être placée dans la première ou la seconde demi-trame du signal d'image principale ;

ledit circuit de sortie étant sensible auxdits décalages pour déplacer l'instant de synchronisation du départ de balayage de demi-trame de ladite image incrustée par l'équivalent desdits décalages.

2. Circuit de compression verticale d'un signal d'image incrustée selon la revendication 1, dans lequel ledit circuit de sortie délivre des valeurs d'élément d'image interpolées à partir des valeurs d'élément d'image en fonction dudit signal d'image incrustée d'entrée et effectue une compression verticale par amincissement des lignes de balayage.

3. Circuit de compression verticale d'un signal d'image incrustée selon la revendication 1 ou 2, dans lequel ledit circuit de génération de décalage (13a) fixe le décalage de la première demi-trame à 0, et détermine le décalage de la seconde demi-trame en retranchant 1/2 de 1/2 de l'inverse du taux de compression, tel que défini par l'expression $\frac{1}{2}$ x $\frac{1}{n}$ xH - $\frac{1}{2}$ H , lorsque les polarités de demi-trame de ladite image principale et de ladite image incrustée sont identiques, et détermine le décalage de la première demi-trame en retranchant 1/2 de 1/2 de l'inverse du taux de compression, tel que défini par $\frac{1}{2}$ x $\frac{1}{n}$ xH - $\frac{1}{2}$ H , et fixe le décalage de la seconde demi-trame à -1, tel que défini par l'expression -H, lorsque les polarités de demi-trame de ladite image principale et de ladite image incrustée sont différentes, H étant le temps de balayage d'une ligne et n le taux de compression.

4. Circuit de compression verticale d'un signal d'image incrustée selon la revendication 1 ou 2, dans lequel ledit circuit de génération de décalage (13b) fixe le décalage de la première demi-trame à 0, et détermine le décalage de la seconde demi-trame en retranchant 1/2 de 1/2 de l'inverse du taux de compression, tel que défini par l'expression $\frac{1}{2}$ x $\frac{1}{n}$ xH - $\frac{1}{2}$ H , lorsque les polarités de demi-trame de ladite image principale et de ladite image incrustée sont identiques, et détermine le décalage de la première demi-trame à 1/2 de l'inverse du taux de compression, tel que défini par l'expression $\frac{1}{2}$ x $\frac{1}{n}$ xH , et fixe le décalage de la seconde demi-trame à -1/2, tel que défini par l'expression -1/2H, lorsque les polarités de demi-trame de ladite image principale et de ladite image incrustée sont différentes, où H est le temps de balayage d'une ligne et n est le taux de compression.

5. Circuit de compression verticale d'un signal d'image incrustée selon la revendication 1 ou 2, dans lequel ledit circuit de génération de décalage comporte :

un premier circuit de génération de décalage (13a) fixant le décalage de la première demi-trame à 0, et déterminant le décalage de la seconde demi-trame en retranchant 1/2 de 1/2 de l'inverse du taux de compression, tel que défini par l'expression $\frac{1}{2}$ x $\frac{1}{n}$ xH - $\frac{1}{2}$ H , lorsque les polarités de demi-trame de ladite image principale et de ladite image incrustée sont identiques, et déterminant le décalage de la première demi-trame en retranchant 1/2 de 1/2 de l'inverse du taux de compression, tel que défini par l'expression $\frac{1}{2}$ x $\frac{1}{n}$ xH - $\frac{1}{2}$ H , et fixant le décalage de la seconde demi-trame à -1, tel que défini par l'expression -H, lorsque les polarités de demi-trame de ladite image principale et de ladite image incrustée sont différentes ;
un second circuit de génération de décalage (13b) fixant le décalage de la première demi-trame à 0, et déterminant le décalage de la seconde demi-trame en retranchant 1/2 de 1/2 de l'inverse du taux de compression tel que défini par l'expression $\frac{1}{2}$ x $\frac{1}{n}$ xH - $\frac{1}{2}$ H , lorsque les polarités de demi-trame de ladite image principale et de ladite image incrustée sont identiques, et déterminant le décalage de la première demi-trame à 1/2 de l'inverse du taux de compression, tel que défini par l'expression $\frac{1}{2}$ x $\frac{1}{n}$ xH , et le décalage de la seconde demi-trame à -1/2, tel que défini par l'expression -1/2H, lorsque les polarités de demi-trame de ladite image principale et de ladite image incrustée sont différentes, dans laquelle H est le temps de balayage d'une ligne et n est le taux de compression ; et
un circuit de détection de différence de fréquence (15) détectant la différence entre la fréquence de demi-trame de l'image principale et la fréquence de demi-trame de l'image incrustée, et effectuant une sélection pour délivrer un des décalages générés par ledit premier circuit de génération de décalage et des décalages générés par ledit second circuit de génération de décalage selon ladite différence de fréquence détectée.

Fig. 1

main picture field discrimination signal

compression rate

main picture
vertical pulse
horizontal pulse

11

main picture
field
discrimination
circuit

subpicture field discrimination signal

12

subpicture
vertical pulse
horizontal pulse

subpicture
field
discrimination
circuit

offset
generation
circuit

13

input subpicture image signal

interpolation
circuit

14

output subpicture
image signal

Fig. 2

main picture field frequency

subpicture field frequency

main picture field discrimination signal

11 — main picture field discrimination circuit

compression rate

13a — the offset generation circuit of claim 3

15 — frequency difference detecting circuit

13b — the offset generation circuit of claim 4

14 — interpolation circuit

main picture vertical pulse / horizontal pulse

12 — subpicture field discrimination circuit

subpicture vertical pulse / horizontal pulse

subpicture field discrimination signal

input subpicture image signal

output subpicture image signal

10

Fig. 3

EP 0 746 154 B1

the first field  O

the second field  △

(a)  In the case of using the offset circuit of claim 3

input subpicture image signal
output subpicture image signal
(When main and sub field polarities are the same)→
(When main and sub field polarities are different)→

input subpicture image signal
output subpicture image signal
(When main and sub field polarities are the same)
(When main and sub field polarities are different)

(b)  In the case of using the offset circuit of claim 4

input subpicture image signal
output subpicture image signal
(When main and sub field polarities are the same)→
(When main and sub field polarities are different)

input subpicture image signal
output subpicture image signal
(When main and sub field polarities are the same)
(When main and sub field polarities are different)

picture upper direction ←        → picture lower direction

Fig. 4

(a)

(b)